(19) Europäisches Patentamt / European Patent Office / Office européen des brevets

(11) **EP 2 113 437 B1**

(12) **EUROPÄISCHE PATENTSCHRIFT**

(45) Veröffentlichungstag und Bekanntmachung des Hinweises auf die Patenterteilung:
**26.12.2012  Patentblatt 2012/52**

(51) Int Cl.:
***B60W 30/08*** *(2012.01)*

(21) Anmeldenummer: **09100203.0**

(22) Anmeldetag: **26.03.2009**

(54) **Verfahren zur Bestimmung von freien Bereichen in der, insbesondere für die Fahrzeugführung relevanten Umgebung eines Kraftfahrzeugs**

Method for ascertaining free areas in the vicinity of a motor vehicle in particular the vicinity relevant to driving the vehicle

Procédé de détermination de domaines libres dans l'environnement pertinent d'un véhicule automobile, notamment pour la direction de véhicule

(84) Benannte Vertragsstaaten:
**DE FR GB**

(30) Priorität: **28.04.2008   DE 102008001409**

(43) Veröffentlichungstag der Anmeldung:
**04.11.2009   Patentblatt 2009/45**

(73) Patentinhaber: **Robert Bosch GmbH
70469 Stuttgart (DE)**

(72) Erfinder:
 • **Becker, Jan-Carsten
   Palo Alto, 94304 (US)**
 • **Hoetter, Michael
   30989, Gehrden (DE)**
 • **Ike, Thorsten
   30519, Hannover (DE)**
 • **Grabe, Baerbel
   31655, Stadthagen (DE)**
 • **Simon, Andreas
   31135, Hildesheim (DE)**

(56) Entgegenhaltungen:
**EP-A1- 0 913 751        EP-A1- 1 731 922
EP-A2- 1 559 613        EP-B1- 1 065 520
DE-A1-102004 007 553    DE-A1-102004 047 130
DE-A1-102006 046 903    DE-A1-102006 047 131
US-A- 6 069 581         US-A1- 2005 192 749
US-A1- 2006 235 610**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 113 437 B1

**Beschreibung**

Die Erfindung betrifft ein Verfahren zur Bestimmung von freien Bereichen in der, insbesondere für die Fahrzeugführung relevanten Umgebung eines Kraftfahrzeugs. Die Erfindung betrifft ebenfalls ein Verfahren zur Kollisionsvermeidung für ein Kraftfahrzeug. Des Weiteren betrifft die Erfindung ein Computerprogramm, ein Computerprogrammprodukt und eine Vorrichtung, um derartige Verfahren auszuführen bzw. durchzuführen.

Bisher bekannte Sensoren zur Umfeldwahrnehmung für Kraftfahrzeuge erfassen in der Regel nur Ortungen oder Objekte in der Fahrzeugumgebung, d. h. belegte Gebiete, nicht jedoch explizit die freien bzw. nicht-belegten Gebiete in der Fahrzeugumgebung. Für Fahrerassistenzsysteme, die automatisiert vor Hindernissen ausweichen (z. B. unter Berücksichtigung einer zuvor ermittelten Ausweichtrajektorie), ist jedoch auch die Befahrbarkeit von Gebieten relevant. Grundsätzlich sind Gebiete in denen keine Objekte detektiert wurden, nicht notwendigerweise frei, d. h. befahrbar, vielmehr besteht im Allgemeinen in diesen Gebieten bzw. Bereichen kein explizites Wissen über die Befahrbarkeit.

Die DE 10 2004 056 120 A1 betrifft ein Verfahren zur Kollisionsvermeidung oder Kollisionsfolgenminderung während einer Fahrt, bei der sich ein Kraftfahrzeug einem Hindernis, insbesondere einem vorausfahrenden Fahrzeug, nähert.

Die DE 10 2006 047 131 A1 betrifft ein Verfahren zum automatischen Steuern eines Fahrzeugs, bei dem zur Bereitstellung einer Ausweichtrajektorie des Fahrezeugs vor einem Hindernis Informationen über mindestens eine durch das Fahrzeug frei befahrbare Fläche berücksichtigt werden.

In der US 2005/192749 A1 sind ein Wegplaner und ein Verfahren zur Bestimmung eines Weges für ein Fahrzeug beschrieben.

In der DE 10 2005 026 386 A1 bzw. in der EP 1 731 922 A1 sind ein Verfahren und eine Vorrichtung zum Bestimmen von Freiflächen in der Umgebung eines Fahrzeugs beschrieben.

In der EP 0 913 751 A1 ist ein autonomes Fahrzeug und ein Verfahren zur Steuerung eines autonomen Fahrzeuges angegeben.

Die DE 10 2004 007 553 A1 betrifft eine Erfassungsvorrichtung eines Kraftfahrzeuges zur Erfassung eines Hindernisses in einem Umgebungsbereich des Kraftfahrezeuges mit wenigstens einer ersten Umgebungssensoreinheit. Erfindungsgemäß wird dort vorgeschlagen, eine erste Recheneinheit zur Generierung einer ersten Wahrscheinlichkeitsverteilung für das Vorhandensein des Hindernisses in dem mit der ersten Umgebungssensoreinheit erfassten Umgebungsbereich vorzusehen, wobei der Umgebungsbereich in eine vorgegebene Anzahl von Felder aufgeteilt wird und für jedes vorgegebene Feld ein Wahrscheinlichkeitswert als Maß für das Vorhandensein des Hindernisses in dem jeweiligen Feld bestimmt wird.

In der US 2006/235610 A1 ist ein Navigationssystem für mobile Fahrzeuge angegeben, welches ein Polygonrasterungsmodul aufweist, das eingerichtet ist, um eine Polygonrasterung auf einer oder mehrerer Karten eines Hindernisbereichs durchzuführen, um hindemisfreie Gebiete innerhalb des Hindernisbereichs zu identifizieren.

Vorteile der Erfindung

Das erfindungsgemäße Verfahren zur Bestimmung von freien Bereichen in der, insbesondere für die Fahrzeugführung relevanten Umgebung eines Kraftfahrzeugs, insbesondere zur Ermittlung einer Ausweichtrajektorie für ein Fahrerassistenzsystem des Kraftfahrzeugs, wobei Informationen von wenigstens einem Objektdetektionssensor des Kraftfahrzeugs über wenigstens ein erfasstes Objekt unter Berücksichtigung der Eigenschaften des physikalischen Messprinzips des wenigstens einen Objektdetektionssensors verwendet werden, und wobei zusätzlich berücksichtigt wird, dass der wenigstens eine Objektdetektionssensor in der Lage ist, mittels einer Einzelmessung mehrere Objekte unmittelbar zu detektieren, wobei eine Abschätzung dafür erfolgt, dass die in einer Einzelmessung des Objektdetektionssensors enthaltene Information über freie Bereiche durch zwischen dem wenigstens einen Objektdetektionssensor und den jeweiligen freien Bereichen liegende Objekte herabgesetzt wird und wobei eine systembedingte Detektionsleistung des wenigstens einen Objektdetektionssensors berücksichtigt wird, hat den Vorteil, dass in einfacher Weise Informationen über die Freiheit bzw. Befahrbarkeit von Gebieten der Fahrzeugumgebung aus den Messungen der Ortungen oder Objekte abgeleitet werden können, d. h. die Freiflächeninformation wird aus den Objektdetektionen sozusagen geschätzt. Dies ist für bestimmte Sensortypen unter Berücksichtigung ihres jeweiligen physikalischen Messprinzips möglich. Die ermittelten Befahrbarkeitsdaten können anschließend Fahrerassistenzsystemen zur Verfügung gestellt werden, die mittels einer Ausweichtrajektorie automatisiert vor Hindernissen ausweichen. Sehr vorteilhaft ist außerdem, dass bei der Ableitung der Freiflächeninformation berücksichtigt wird, dass von dem Objektdetektionssensor mehrere Objekte in einem Sichtstrahl erfasst werden können.

Bestimmte Sensoren sind in einer Einzelmessung mehrzielfähig, d. h. es können mehrere Objekte bzw. Ziele durch eine einzelne Messung unmittelbar detektiert werden. Beispielsweise weitet sich ein Laserstrahl eines Sensors in der Entfernung auf, so dass ein Objekt, das sich nur teilweise im Strahl befindet, den Strahl auch nur teilweise abdeckt, und somit gegebenenfalls dahinter liegende Objekte ebenfalls detektiert werden können. Weiterhin können optische Strahlen beispielsweise Fensterscheiben von Fahrzeugen durchdringen und daher ebenfalls dahinterliegende Objekte erfassen. Dies kann die in einer Messung enthaltene Freiflächeninformation bzw. deren Informationsgehalt durch die davor liegenden Objekte herabsetzen.

Erfindungsgemäß ist ferner vorgesehen, dass eine systembedingte Detektionsleistung des wenigstens einen Objektdetektionssensors berücksichtigt wird. Dies ist möglich, wenn vorab bekannt ist, wie hoch die Detektionsleistung des Sensors an einem bestimmten Ort innerhalb seines Detektionsbereichs ist. So kann beispielsweise die Detektionsleistung in größerer Entfernung oder am Rand des Detektionsbereichs abnehmen. Diese sensorsystembedingte Detektionsleistung kann vorab, insbesondere durch eine Detektionsfeldmessung, experimentell ermittelt und in einer Liste abgelegt werden. Weiterhin kann für die sensorsystembedingte Detektionsleistung ein Modell erstellt und die Detektionsleistung dementsprechend modellbasiert während der Laufzeit bzw. während des Betriebs ermittelt werden.

Wenigstens ein Objektdetektionssensor kann als Lidarsensor ausgebildet sein. Alternativ oder zusätzlich kann wenigstens ein Objektdetektionssensor als Videosensor ausgebildet sein. Selbstverständlich können auch weitere Sensortypen verwendet werden. Mit den entsprechenden Änderungen sind sowohl mehrere Sensoren als auch Kombinationen unterschiedlicher Sensoren einsetzbar.

Bei bestimmten Sensoren, beispielsweise Videosensoren, ist es möglich, mit voneinander unabhängigen Verfahren der Mustererkennung basierend auf dem gleichen Videobild sowohl Objekte, also für die Fahrzeugführung nicht befahrbare Bereiche bzw. Flächen, als auch freie, d. h. befahrbare Flächen zu detektieren. Andere Sensoren messen nur direkt die Objektposition über die Laufzeit des Laserstrahls bis zu einem Hindernis (z. B. Lidarsensoren). Aus dem physikalischen Messprinzip des jeweiligen Sensors lässt sich jedoch mit einer gewissen Sicherheit ableiten, dass der Weg (und damit die Fläche, die der Laserstrahl überstreicht bzw. überquert) bis zu dem detektierten Objekt frei ist. Dies ist relativ eindeutig für den Fall, dass ein Sensor genau ein Objekt detektieren kann. Erfindungsgemäß wird jedoch zusätzlich berücksichtigt, dass der Sensor mehrere Objekte erfassen kann.

Den Bereichen in der Umgebung des Kraftfahrzeugs können jeweils Wahrscheinlichkeitswerte für die Nichtbelegung des jeweiligen Bereichs zugeordnet werden. Des Weiteren können die Bereiche in der Umgebung des Kraftfahrzeugs in einzelne Zellen unterteilt werden, denen jeweils Wahrscheinlichkeitswerte für die Nichtbelegung der jeweiligen Zelle zugeordnet werden.

In Anspruch 7 ist ein Verfahren zur Kollisionsvermeidung für ein Kraftfahrzeug angegeben.

Ein Computerprogramm mit Programmcodemitteln bzw. ein Computerprogrammprodukt mit Programmcodemitteln, die auf einem computerlesbaren Datenträger gespeichert sind, um die erfindungsgemäßen Verfahren auszuführen, sind in Anspruch 8 bzw. Anspruch 9 angegeben.

Anspruch 10 betrifft eine Vorrichtung, insbesondere Fahrerassistenzsystem eines Kraftfahrzeugs, zur Durchführung der erfindungsgemäßen Verfahren.

Das erfindungsgemäße Verfahren zur Bestimmung von freien Bereichen in der, insbesondere für die Fahrzeugführung relevanten Umgebung eines Kraftfahrzeugs bzw. das erfindungsgemäße Verfahren zur Kollisionsvermeidung für ein Kraftfahrzeug, ist vorzugsweise als Computerprogramm auf einer Steuereinrichtung eines Fahrerassistenzsystems eines Kraftfahrzeugs realisiert, wobei auch andere Lösungen selbstverständlich in Frage kommen. Dazu ist das Computerprogramm in einem Speicherelement der Steuereinrichtung gespeichert. Durch Abarbeitung auf einem Mikroprozessor der Steuereinrichtung wird das Verfahren ausgeführt. Das Computerprogramm kann auf einem computerlesbaren Datenträger (Diskette, CD, DVD, Festplatte, USB-Memory Stick, Speicherkarte oder dergleichen) oder einem Internetserver als Computerprogrammprodukt gespeichert sein und von dort aus in das Speicherelement der Steuereinrichtung übertragen werden.

Vorteilhafte Ausgestaltungen und Weiterbildungen der Erfindung ergeben sich aus den Unteransprüchen. Nachfolgend ist anhand der Zeichnung ein Ausführungsbeispiel der Erfindung prinzipmäßig beschrieben.

Kurzbeschreibung der Zeichnung

Es zeigen:

Figur 1  Eine vereinfachte schematische Darstellung eines Kraftfahrzeugs, in welchem ein erfindungsgemäßes Verfahren implementiert ist;

Figur 2  ein erstes Diagramm zu einer Ausführungsform des erfindungsgemäßen Verfahrens;

Figur 3  ein zweites Diagramm zu einer Ausführungsform des erfindungsgemäßen Verfahrens;

Figur 4  ein drittes Diagramm zu einer Ausführungsform des erfindungsgemäßen Verfahrens;

Figur 5  ein viertes Diagramm zu einer Ausführungsform des erfindungsgemäßen Verfahrens; und

Figur 6  ein fünftes Diagramm zu einer Ausführungsform des erfindungsgemäßen Verfahrens.

Beschreibung von Ausführungsbeispielen

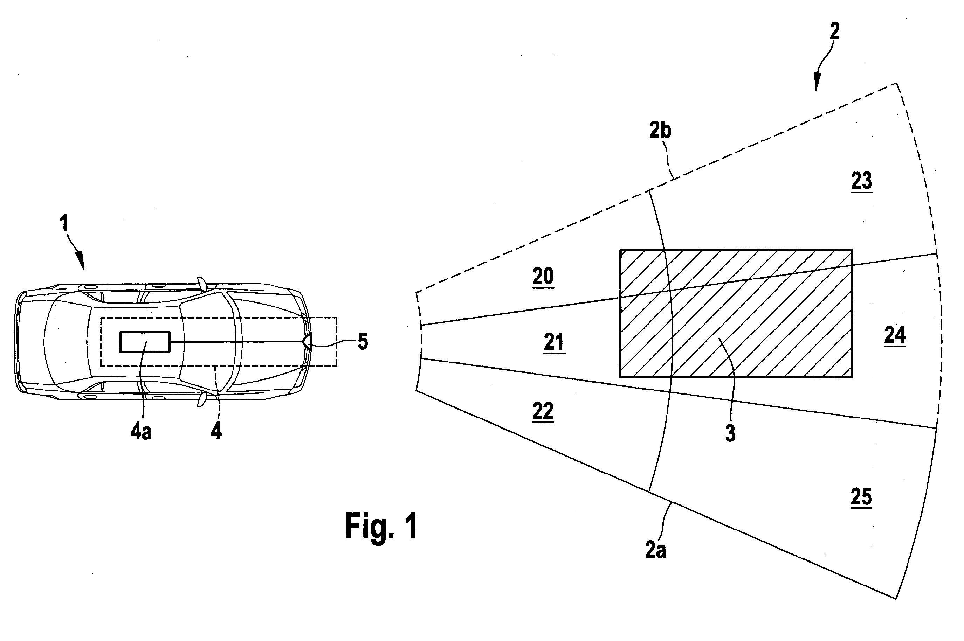

In Figur 1 ist ein Kraftfahrzeug 1 dargestellt, auf welchem das erfindungsgemäße Verfahren zur Bestimmung von freien Bereichen 2a in der für die Fahrzeugführung relevanten Umgebung 2 des Kraftfahrzeugs 1, insbesondere zur Ermittlung einer Ausweichtrajektorie (nicht dargestellt), implementiert ist. Dieses kann im Rahmen eines Verfahrens zur Kollisionsvermeidung für das Kraftfahrzeug 1, bei welchem bei einem sich während der Fahrt nähernden, in einem belegten Bereich 2b befindlichen, Objekt bzw. Hindernis 3 ein Fahrmanöver des Kraftfahrzeugs 1 zum Ausweichen autonom oder semiautonom durchgeführt oder vorgeschlagen wird, ausgeführt werden. Das Fahrmanöver basiert auf einer kollisionsvermeidenden Ausweichtrajektorie, welche unter Berücksichtigung von mittels des Verfahrens zur Bestimmung von freien Bereichen 2a in der Umgebung 2 des Kraftfahrzeugs 1 erfassten Freiräumen bzw. freien Bereichen 2a ermittelt wird. Darauf basierend kann eine als Fahrerassistenzsystem 4 ausgebildete Vorrichtung zur Durchführung des erfindungsgemäßen Verfahrens den Fahrer beim Ausweichen vor Hindernissen 3 unterstützen und ihn autonom oder semiautonom im Fall einer bevorstehenden Kollision auf eine sichere Trajektorie führen, die mit keinem das eigene Kraftfahrzeug 1 umgebendem Hindernis 3 kollidiert. Dies kann zum einen durch Anzeige einer entsprechenden Warnung oder zum anderen durch einen aktiven Eingriff des Fahrerassistenzsystems 4 mittels eines korrigierenden Bremseingriffs über eine gezielte Bremskrafterhöhung oder mittels eines entsprechenden Lenkeingriffs über ein nicht dargestelltes Lenksystem des Kraftfahrzeugs 1, erfolgen.

Das Kraftfahrzeug 1 bzw. das Fahrerassistenzsystem 4 weist als umgebungserfassende Sensorik bzw. Objektdetektionssensor einen Lidarsensor 5 zur messtechnischen Erfassung der Verkehrssituation bzw. des Umfelds 2 vor dem Kraftfahrzeug 1 auf. In einem anderen Ausführungsbeispiel könnte der Objektdetektionssensor auch als Videosensor 5 (CCD-Sensor oder dergleichen) ausgebildet sein. Selbstverständlich können auch weitere Sensortypen verwendet werden. Mit den entsprechenden Änderungen sind sowohl mehrere Sensoren als auch Kombinationen unterschiedlicher Sensoren einsetzbar. In weiteren nicht dargestellten Ausführungsbeispielen könnte auch eine Umgebungssensorik zur Erfassung der Verkehrssituation hinter dem Kraftfahrzeug 1 vorgesehen sein.

Der Lidarsensor 5 steht mit einer Steuereinrichtung 4a des Fahrerassistenzsystems 4 in Verbindung, welche auch ein nicht näher dargestelltes Auswertemodul aufweist. Mit der Steuereinrichtung 4a können aufgrund der Sensorsignale des Lidarsensors 5 Objekte bzw. Hindernisse 3, erfasst werden. Im Rahmen des Fahrerassistenzsystems 4 läuft nun auf der Steuereinrichtung 4a das Verfahren zur Kollisionsvermeidung für das Kraftfahrzeug 1 ab, bei welchem bei einem sich während der Fahrt nähernden Hindernis 3 ein Fahrmanöver des Kraftfahrzeugs 1 zum Ausweichen autonom oder semiautonom durchgeführt oder über eine Warneinrichtung dem Fahrer oder weiteren Fahrzeugsystemen vorgeschlagen wird. Das Fahrmanöver basiert auf einer kollisionsvermeidenden Ausweichtrajektorie, welche unter Berücksichtigung von mittels des erfindungsgemäßen Verfahrens zur Bestimmung von freien Bereichen 2a in der Umgebung 2 des Kraftfahrzeugs 1 bestimmten freien Bereichen 2a ermittelt wird. Dabei werden Informationen von dem Lidarsensor 5 des Kraftfahrzeugs 1 über das erfasste Objekt 3 unter Berücksichtigung der Eigenschaften des physikalischen Messprinzips des Lidarsensors 5 verwendet, wobei zusätzlich berücksichtigt wird, dass der Lidarsensor 5 in der Lage ist, mittels einer Einzelmessung mehrere Objekte 3 unmittelbar zu detektieren.

Das erfindungsgemäße Verfahren findet in einem Rahmen Anwendung, in dem Wissen über den Zustand der für die Fahrzeugführung relevanten Umgebung 2 des Kraftfahrzeugs 1 in Form von Wahrscheinlichkeiten für die Belegung und Nichtbelegung von Gebieten bzw. der Bereiche 2a, 2b abgelegt wird. Somit können den Bereichen 2a, 2b in der Umgebung 2 des Kraftfahrzeugs 1 jeweils Wahrscheinlichkeitswerte für die Nichtbelegung des jeweiligen Bereichs 2a, 2b zugeordnet werden. Im vorliegenden Ausführungsbeispiel werden die Bereiche 2a, 2b in der Umgebung 2 des Kraftfahrzeugs 1 in einzelne Zellen 20 bis 25 unterteilt, denen jeweils Wahrscheinlichkeitswerte $p_{frei}$ für die Nichtbelegung der jeweiligen Zelle 20 bis 25 zugeordnet werden. $p_{belegt}$ bezeichnet die Wahrscheinlichkeit für die Belegung der jeweiligen Zelle 20 bis 25.

Dabei gilt:

$$p_{belegt}(x) + p_{frei}(x) \leq 1, \qquad\qquad (2.1)$$

bzw. genauer:

$$p_{belegt}(x) + p_{frei}(x) + p_{Unwissen}(x) = 1, \qquad\qquad (2.2)$$

wobei x ein Skalar oder Vektor sein kann und die Position des Gebiets bzw. Bereichs 2a, 2b oder vorliegend der Zelle 20 bis 25 im Raum angibt. Im Folgenden wird der Einfachheit halber ohne Einschränkung der Allgemeinheit eine skalare Position angenommen. Des Weiteren bezeichnet $p_{Unwissen}$ die Detektionsunsicherheit. Der Lidarsensor 5 ist in der Lage, Belegungen der Bereiche 2a, 2b in Form einer Objekt- oder Hindernisdetektion zu erkennen. Der Lidarsensor 5 selbst liefert keine Information über die freie Fläche bzw. den freien Bereich 2a innerhalb seines Detektionsbereichs, d. h. für die unmittelbare Messung des Lidarsensors 5 gilt $p_{frei} = 0$. Dieses Verfahren liefert nun eine Berechnungsvorschrift, mit der unter Zuhilfenahme von Kenntnissen über das Messverfahren die Wahrscheinlichkeit abgeleitet wird, mit welcher die Bereiche 2a, 2b innerhalb des Detektionsbereichs frei, d. h. befahrbar sind. Es ist vorab bekannt, wie gut die Detektionsleistung des Lidarsensor 5 an einem bestimmten Ort innerhalb seines Detektionsbereichs ist. Dies wird durch die sensorsystembedingte Detektionsleistung $p_{sys}(x)$ mit $0 \leq p_{sys}(x) \leq 1$ für jeden Ort bzw. jede Zelle 20 bis 25 im Detektionsbereich beschrieben. Aus Gleichung 2.1 folgt unmittelbar die maximale Abschätzung des Informationsgehalts einer Messung bezüglich der Freiflächeninformation:

$$p_{frei}(x) \leq 1 - p_{belegt}(x). \qquad (2.3)$$

Der Lidarsensor 5 ist in einer Einzelmessung mehrzielfähig, d. h. es können mehrere Objekte 3 durch eine einzelne Messung unmittelbar detektiert werden. Daher erfolgt nun die Abschätzung, dass die in einer Messung enthaltene Freiflächeninformation durch die davor liegenden Objekte 3 herabgesetzt wird:

$$p_{frei}(x) \leq 1 - \max_{0...x}(p_{belegt}(x)). \qquad (2.4)$$

Unter Berücksichtigung der systembedingten Detektionsleistung $p_{sys}(x)$ bezüglich der Detektion von Freiflächen 2a folgt schließlich:

$$p_{frei}(x) \leq p_{sys}(x)(1 - \max_{0...x}(p_{belegt}(x))). \qquad (2.5)$$

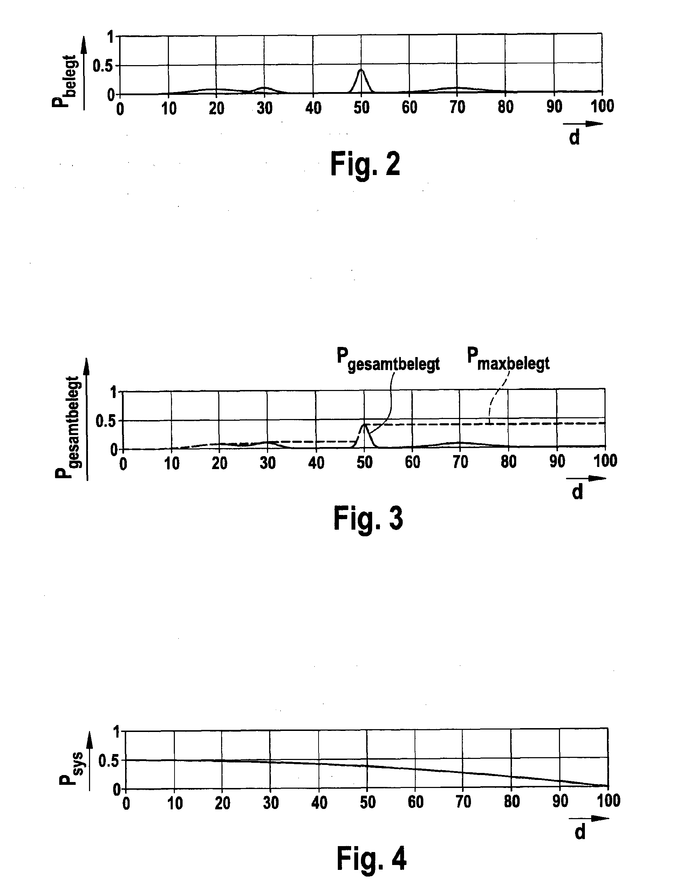

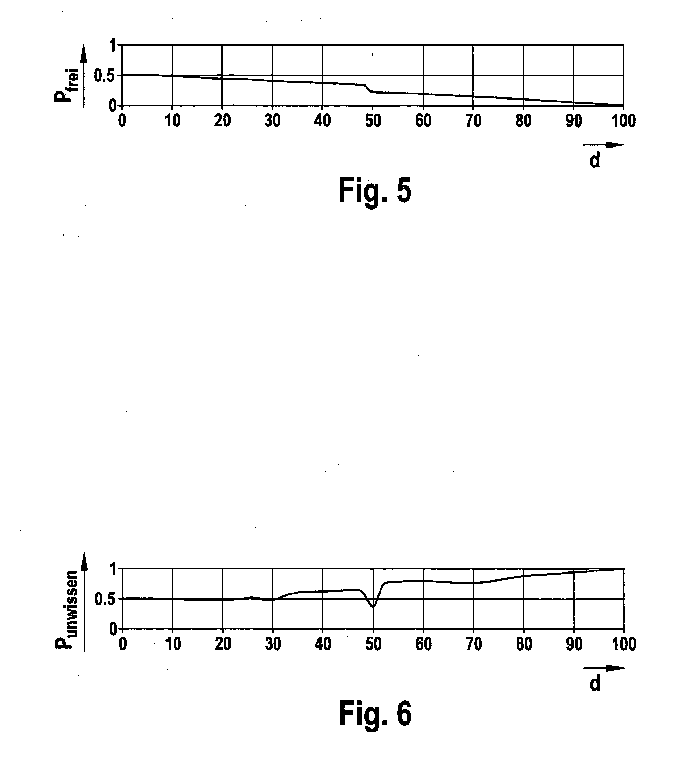

Die Figuren 2 bis 6 zeigen ein numerisches Beispiel für die entsprechenden Wahrscheinlichkeitswerte. Zunächst sind in Figur 2 die Belegungswahrscheinlichkeiten $p_{belegt}$ der beispielhaften Einzeldetektionen einer Messung über die Entfernung d zu sehen. Figur 3 zeigt die resultierende Gesamtbelegungswahrscheinlichkeit $p_{gesarntbelegt}$ der Messung sowie in dem gleichen Diagramm gestrichelt überlagert $\max_{0...x}(p_{belegt}(x))$. In Figur 4 ist $p_{sys}(x)$ angegeben, wobei die Kurve hier beispielhaft als quadratisch abfallende Kennlinie angenommen wurde. Hieraus ergibt sich das Ergebnis für $p_{frei}$ nach Gleichung 2.5, welches in Figur 5 dargestellt ist. Letztlich kann es noch interessant sein, die gesamte Detektionsunsicherheit $p_{Unwissen}$ einer Messung nach Gleichung 2.2 zu berechnen (siehe Figur 6).

Das erfindungsgemäße Verfahren zur Bestimmung von freien Bereichen 2a in der, insbesondere für die Fahrzeugführung relevanten Umgebung 2 des Kraftfahrzeugs 1 bzw. das erfindungsgemäße Verfahren zur Kollisionsvermeidung für das Kraftfahrzeug 1, ist vorzugsweise als Computerprogramm auf des Steuereinrichtung 4a eines Fahrerassistenzsystems 4 des Kraftfahrzeugs 1, realisiert, wobei auch andere Lösungen selbstverständlich in Frage kommen. Dazu ist das Computerprogramm in einem nicht dargestellten Speicherelement der Steuereinrichtung 4a gespeichert. Durch Abarbeitung auf einem ebenfalls nicht dargestellten Mikroprozessor der Steuereinrichtung 4a wird das Verfahren ausgeführt. Das Computerprogramm kann auf einem computerlesbaren Datenträger (Diskette, CD, DVD, Festplatte, USB-Memory Stick, Speicherkarte oder dergleichen) oder einem Internetserver als Computerprogrammprodukt gespeichert sein und von dort aus in das Speicherelement der Steuereinrichtung 4a übertragen werden.

**Patentansprüche**

1. Verfahren zur Bestimmung von freien Bereichen (2a) in der Umgebung (2) eines Kraftfahrzeugs (1), wobei Informationen von wenigstens einem Objektdetektionssensor (5) des Kraftfahrzeugs (1) über wenigstens ein erfasstes Objekt (3) unter Berücksichtigung der Eigenschaften des physikalischen Messprinzips des wenigstens einen Objektdetektionssensors (5) verwendet werden, wobei zusätzlich berücksichtigt wird, dass der wenigstens eine Objektdetektionssensor (5) in der Lage ist, mittels einer Einzelmessung mehrere Objekte (3) unmittelbar zu detektieren, **dadurch gekennzeichnet, dass** eine Abschätzung dafür erfolgt, dass die in einer Einzelmessung des Objektdetektionssensors (5) enthaltene Information über freie Bereiche (2a) durch teilweise zwischen dem wenigstens einen Objektdetektionssensor (5) und den jeweiligen freien Bereichen (2a) liegende Objekte (3) herabgesetzt wird, wobei eine systembedingte Detektionsleistung($p_{sys}$) des wenigstens einen Objektdetektionssensors (5) berücksichtigt wird, und wobei eine Abschätzung des Informationsgehalts einer Messung bezüglich der Freiflächeninformation durch $p_{frei}(x) \leq p_{sys}(x)(1 - \max_{0...x}(p_{belegt}(x)))$ erfolgt, wobei x die Position des Bereichs (2a,2b) im Raum, $p_{sys}(x)$ mit $0 \leq p_{sys}(x) \leq 1$ die systembedingte Detektionsleistung des Objektdetektionssensors (5) und $p_{belegt}(x)$ die Wahrscheinlichkeit für die Belegung angibt.

**2.** Verfahren nach Anspruch 1, **dadurch gekennzeichnet, dass** es zur Bestimmung von freien Bereichen (2a)in der für die Fahrzeugführung relevanten Umgebung (2) des Kraftfahrzeugs (1) durchgeführt wird.

**3.** Verfahren nach Anspruch 1 oder 2, **dadurch gekennzeichnet, dass** es zur Ermittlung einer Ausweichtrajektorie für ein Fahrerassistenzsystem (4) des Kraftfahrzeugs (1) durchgeführt wird.

**4.** Verfahren nach einem der vorhergehenden Ansprüche, **dadurch gekennzeichnet, dass** wenigstens ein Objektdetektionssensor ein Lidarsensor (5) ist.

**5.** Verfahren nach einem der vorhergehenden Ansprüche, **dadurch gekennzeichnet, dass** wenigstens ein Objektdetektionssensor ein Videosensor (5) ist.

**6.** Verfahren nach einem der vorhergehenden Ansprüche, **dadurch gekennzeichnet, dass** den Bereichen (2a,2b) in der Umgebung (2) des Kraftfahrzeugs (1) jeweils Wahrscheinlichkeitswerte ($p_{frei}$) für die Nichtbelegung des jeweiligen Bereichs (2a,2b) zugeordnet werden.

**7.** Verfahren nach einem der vorhergehenden Ansprüche, **dadurch gekennzeichnet, dass** die Bereiche (2a,2b) in der Umgebung (2) des Kraftfahrzeugs (1) in einzelne Zellen (20 bis 25) unterteilt werden, denen jeweils Wahrscheinlichkeitswerte ($p_{frei}$) für die Nichtbelegung der jeweiligen Zelle (20 bis 25) zugeordnet werden.

**8.** Verfahren zur Kollisionsvermeidung für ein Kraftfahrzeug (1), bei welchem bei einem sich während der Fahrt nähernden Hindernis (3) ein Fahrmanöver des Kraftfahrzeugs (1) zum Ausweichen autonom oder semiautonom durchgeführt oder vorgeschlagen wird, wobei das Fahrmanöver auf einer kollisionsvermeidenden Ausweichtrajektorie basiert, welche unter Berücksichtigung von mittels des Verfahrens zur Bestimmung von freien Bereichen (2a) in der Umgebung (2) des Kraftfahrzeugs (1) gemäß einem der Ansprüche 1 bis 7 bestimmten freien Bereichen (2a) ermittelt wird.

**9.** Computerprogramm mit Programmcodemitteln, um ein Verfahren gemäß einem der Ansprüche 1 bis 8 durchzuführen, wenn das Programm auf einem Mikroprozessor eines Mikrocomputers, insbesondere auf einer Steuereinrichtung (4a) eines Fahrerassistenzsystems (4) eines Kraftfahrzeugs (1), ausgeführt wird.

**10.** Computerprogrammprodukt mit Programmcodemitteln, die auf einem computerlesbaren Datenträger gespeichert sind, um ein Verfahren gemäß einem der Ansprüche 1 bis 8 durchzuführen, wenn das Programm auf einem Mikroprozessor eines Mikrocomputers, insbesondere auf einer Steuereinrichtung (4a) eines Fahrerassistenzsystems (4) eines Kraftfahrzeugs (1), ausgeführt wird.

**11.** Vorrichtung, insbesondere Fahrerassistenzsystem (4) eines Kraftfahrzeugs (1), zur Durchführung eines Verfahrens gemäß einem der Ansprüche 1 bis 8, mit wenigstens einem Objektdetektionssensor (5) zur Erfassung von Objekten bzw. Hindernissen (3) in einer Umgebung (2) des Kraftfahrzeugs (1), und einer Steuereinrichtung (4a), welche mit dem wenigstens einen Objektdetektionssensor (5) verbunden ist und welche zur Ausführung eines Computerprogramms gemäß Anspruch 9 eingerichtet ist.

**Claims**

1. Method for determining free areas (2a) in the vicinity (2) of a motor vehicle (1), wherein information from at least one object detection sensor (5) of the motor vehicle (1) and relating to at least one sensed object (3) is used by taking into account the properties of the physical measurement principle of the at least one object detection sensor (5), wherein it is additionally taken into account that the at least one object detection sensor (5) is capable of directly detecting a plurality of objects (3) by means of an individual measurement, **characterized in that** an estimation ensures that the information which is contained in an individual measurement of the object detection sensor (5) and relates to free areas (2a) is reduced by objects (3) lying partially between the at least one object detection sensor (5) and the respective free areas (2a) wherein a system-induced detection performance ($p_{sys}$) of the at least one object detection sensor (5) is taken into account and wherein an estimation of the information content of a measurement is carried out with respect to the free area information by means of $P_{free}(x) \leq p_{sys}(x)(1-\max_{0...x}(p_{occup}(x)))$ wherein x indicates the position of the area (2a, 2b) in the space, $p_{sys}(x)$ where $0 \leq p_{sys}(x) \leq 1$ indicates the system-induced detection performance of the object detection sensor (5), and $p_{occu}p(x)$ indicates the probability of occupation.

2. Method according to Claim 1, **characterized in that** said method is carried out in order to determine free areas (2a) in the vicinity (2) of the motor vehicle (1) which is relevant to driving the vehicle.

3. Method according to Claim 1 or 2, **characterized in that** said method is carried out in order to obtain a deviation trajectory for a driver assistance system (4) of the motor vehicle (1).

4. Method according to one of the preceding claims, **characterized in that** at least one object detection sensor is a lidar sensor (5).

5. Method according to one of the preceding claims, **characterized in that** at least one object detection sensor is a video sensor (5).

6. Method according to one of the preceding claims, **characterized in that** the areas (2a, 2b) in the vicinity (2) of the motor vehicle (1) are each assigned probability values ($p_{free}$) for the non-occupation of the respective area (2a, 2b).

7. Method according to one of the preceding claims, **characterized in that** the areas (2a, 2b) in the vicinity (2) of the motor vehicle (1) are subdivided into individual cells (20 to 25) which are each assigned probability values ($p_{free}$) for the non-occupation of the respective cell (20 to 25).

8. Method for avoiding collisions for a motor vehicle (1), in which method, when there is an obstacle (3) approaching during travel, a driving manoeuvre of the motor vehicle (1) for the purpose of avoidance is carried out or proposed autonomously or semi-autonomously, wherein the driving manoeuvre is based on a collision-avoiding avoidance trajectory which is obtained by taking into account free areas (2a) which are determined by means of the method for determining free areas (2a) in the vicinity (2) of the motor vehicle (1) according to one of Claims 1 to 7.

9. Computer program with program code means for carrying out a method according to one of Claims 1 to 8, when the program is carried out on a microprocessor of a microcomputer, in particular on a control device (4a) of a driver assistance system (4) of a motor vehicle (1).

10. Computer program product having program code means which are stored on a computer-readable data carrier in order to carry out a method according to one of Claims 1 to 8 when the program is carried out on a microprocessor of a microcomputer in particular on a control device (4a) of a driver assistance system (4) of a motor vehicle (1).

11. Device, in particular a driver assistance system (4) of a motor vehicle (1), for carrying out a method according to one of Claims 1 to 8, having at least one object detection sensor (5) for sensing objects and/or obstacles (3) in the vicinity (2) of the motor vehicle (1), and a control device (4a) which is connected to the at least one object detection sensor (5) and which is configured to execute a computer program according to Claim 9.

**Revendications**

1. Procédé de détermination de zones libres (2a) dans l'environnement (2) d'un véhicule automobile (1), les informations utilisées correspondant à celles d'au moins un capteur de détection d'objet (5) du véhicule automobile (1) relatives à la présence d'au moins un objet (3) déterminé en prenant en compte les propriétés du principe de mesure physique de l'au moins un capteur de détection d'objet (5), le fait que l'au moins un capteur de détection d'objet (5) soit en mesure de détecter directement plusieurs objets (3) par le biais d'une mesure individuelle étant en outre pris en compte, **caractérisé en ce qu'**une estimation provoque une minimisation des informations contenues dans une mesure individuelle du capteur de détection d'objet (5) relatives à des zones libres (2a) en présence d'objets (3) situés en partie entre l'au moins un capteur de détection d'objet (5) et les zones libres (2a) respectives, un résultat de détection ($p_{sys}$), conditionné par le système, de l'au moins un capteur de détection d'objet (5) étant pris en compte et une estimation des informations contenues dans une mesure se produisant par rapport aux informations de surfaces libres par le biais de la formule $p_{frei}(x) \leq p_{sys}(x)(1 - \max_{0...x}(p_{belegt}(x)))$, x correspondant à la position de la zone (2a, 2b) dans l'espace, $p_{sys}(x)$ avec $0 \leq p_{sys}(x) \leq 1$ correspondant au résultat de détection, conditionné par le système, du capteur de détection d'objet (5) et $p_{belegt}(x)$ correspondant à la probabilité d'occupation de ladite zone.

2. Procédé selon la revendication 1, **caractérisé en ce que** l'on détermine les zones libres (2a) dans l'environnement (2) présentant un caractère pertinent pour la direction du véhicule automobile (1).

3. Procédé selon la revendication 1 ou 2, **caractérisé en ce que** l'on calcule une trajectoire d'évitement à destination d'un système d'aide à la conduite (4) placé dans le véhicule automobile (1).

4. Procédé selon l'une quelconque des revendications précédentes, **caractérisé en ce qu'**au moins un capteur de détection d'objet est un capteur de télédétection par laser de type LIDAR (5).

5. Procédé selon l'une quelconque des revendications précédentes, **caractérisé en ce qu'**au moins un capteur de détection d'objet est un capteur vidéo (5).

6. Procédé selon l'une quelconque des revendications précédentes, **caractérisé en ce que** des valeurs de probabilité ($p_{frei}$) de non-occupation de la zone (2a, 2b) respective sont respectivement associées aux zones (2a, 2b) situées dans l'environnement (2) du véhicule automobile (1).

7. Procédé selon l'une quelconque des revendications précédentes, **caractérisé en ce que** les zones (2a, 2b) situées dans l'environnement (2) du véhicule automobile (1) sont subdivisées en cellules individuelles (20 à 25) auxquelles sont respectivement associées des valeurs de probabilité ($p_{frei}$) de non-occupation de la cellule respective (20 à 25).

8. Procédé d'évitement de collision conçu pour un véhicule automobile (1), dans lequel une manoeuvre de conduite effectuée par le véhicule automobile (1) est proposée ou effectuée de façon automatique ou semi-automatique en présence d'un obstacle (3) s'approchant pendant la conduite en vue de l'éviter, la manoeuvre de conduite se basant sur une trajectoire de contournement permettant d'éviter la collision, ladite trajectoire étant calculée par détermination des zones libres (2a) définies à l'aide du procédé de détermination des zones libres (2a) dans l'environnement (2) du véhicule automobile (1) selon l'une quelconque des revendications 1 à 7.

9. Programme informatique pourvu de moyens de codage de programme permettant de mettre en oeuvre un procédé selon l'une quelconque des revendications 1 à 8 lorsque le programme est exécuté sur un microprocesseur de micro-ordinateur, notamment sur un dispositif de commande (4a) d'un système d'aide à la conduite (4) d'un véhicule automobile (1).

10. Produit de programme informatique pourvu de moyens de codage de programme pouvant être mémorisés sur un support de données lisible par ordinateur en vue de mettre en oeuvre un procédé selon l'une quelconque des revendications 1 à 8, lorsque le programme est exécuté sur un microprocesseur de micro-ordinateur, notamment sur un dispositif de commande (4a) d'un système d'aide à la conduite (4) d'un véhicule automobile (1).

11. Dispositif, notamment système d'aide à la conduite (4) d'un véhicule automobile (1), conçu pour mettre en oeuvre un procédé selon l'une quelconque des revendications 1 à 8, avec au moins un capteur de détection d'objet (5) servant à détecter des objets et/ou des obstacles (3) dans un environnement (2) du véhicule automobile (1) et avec un dispositif de commande (4a) relié à l'au moins un capteur de détection d'objet (5) et conçu pour exécuter un programme informatique selon la revendication 9.

Fig. 1

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004056120 A1
- DE 102006047131 A1
- US 2005192749 A1
- DE 102005026386 A1
- EP 1731922 A1
- EP 0913751 A1
- DE 102004007553 A1
- US 2006235610 A1